# EUROPEAN PATENT APPLICATION

(11) **EP 1 970 804 A1**
(43) Date of publication of application: **17.09.2008**
(21) Application number: 07103524.0
(22) Date of filing: 05.03.2007
(51) Int. Cl.: G06F 9/46

(54) **System and method for dynamic memory allocation**

(71) Applicant: Slipstream Data, Inc., Waterloo, ON N2V 2C5 (CA)
(72) Inventor: Sze, David, Kitchener, Ontario N2G 4Z6 (CA); Ahmed, Salmaan, Waterloo, Ontario N2J 1W9 (CA)
(74) Representative: Rickard, David John

(57) **Abstract**

A method for managing the allocation of memory to one or more applications. The method includes allocating a variety of fixed size memory blocks to a requesting application, each of the fixed size memory blocks being free of header information to maximize memory usage. Free, or unused blocks of data of the same fixed size are maintained in a freelist having a number of block roots corresponding to the number of differently fixed size memory blocks. Each block root stores a root pointer to an unused memory block previously allocated to the application. To conserve memory, each unused memory block will store branch pointers to other identically sized unused memory blocks, thereby forming a sequential chain of unused memory blocks with the block root. Therefore, applications requesting the same sized memory block can re-use previously allocated fixed size memory blocks.

## Description

The present invention relates generally to dynamic memory allocation. More particularly, the present invention relates to dynamic memory allocation schemes.

Wireless mobile devices, including personal digital assistants (PDA's) and mobile phones, have a multitude of functions ranging from voice and data communications to Internet browsing. Data communications can include text messaging or email, while Internet browsing can include viewing news websites.

While many wireless mobile devices have voice communication capabilities, wireless text messaging and e-mail are becoming a preferred means of communication. Furthermore, users are constantly demanding the ability to browse the Internet wirelessly on their mobile devices. Hence, news media, entertainment listings, and virtually any content on the Internet should be viewable from the mobile device. Such rich content requires buffering, or storage, which is provided by the on-board memory, such as memory **22**, in the mobile device.

Unfortunately, the consumer demand for minimally sized mobile devices constrains the amount of memory which can be included in a mobile device. For example, some mobile devices are limited to 16MB of on-board memory, some of which may be allocated for running software applications, while the remaining portion is dedicated for storing data. Although modern personal computers (PC) can have 2 giga-bytes of dynamic memory, the high number of concurrent processes and applications run by the PC can quickly consume the available memory, and if inefficiently used, can degrade system performance.

Fortunately, text data in email messages, documents and web pages, can be compressed using lossless compression schemes in order to alleviate memory demand, and reduce transmission time of the data to and from a base station. One example of such text compression is the YK compression algorithm disclosed in U.S. Patent No. 6,801,141 (Yang). Generally, the YK compression algorithm identifies longest prefix string matches in the document or page to be compressed, and replaces instances of repeating strings with a variable. The relative location of the variables are recorded, and storage of the compressed document can accordingly use less memory than the uncompressed document. The YK compression algorithm is but one compression scheme which can be used. Those skilled in the art will understand that there are different text compression algorithms which can be used.

Most applications, including compression schemes such as the YK compression algorithm, will need memory space to perform its functions. This memory can include static memory, transient memory and dynamic memory. Static memory allocation refers to the allocation of memory before the application is executed. Statically allocated memory provides high speed operation, but is generally restrictive, as the size of memory is fixed and unusable by other applications. Transient memory allocation refers to the allocation of memory for buffering information for a short duration of time. Transient memory is typically small, and does not significantly impact memory use relative to the static memory and the dynamic memory. Dynamic memory allocation refers to the allocation of memory while the application is running. Dynamic memory allocation is commonly used since applications will request and use specifically sized portions of memory for executing its functions. Of the listed types of allocated memory, dynamic memory allocation requires careful management to be effectively and efficiently used.

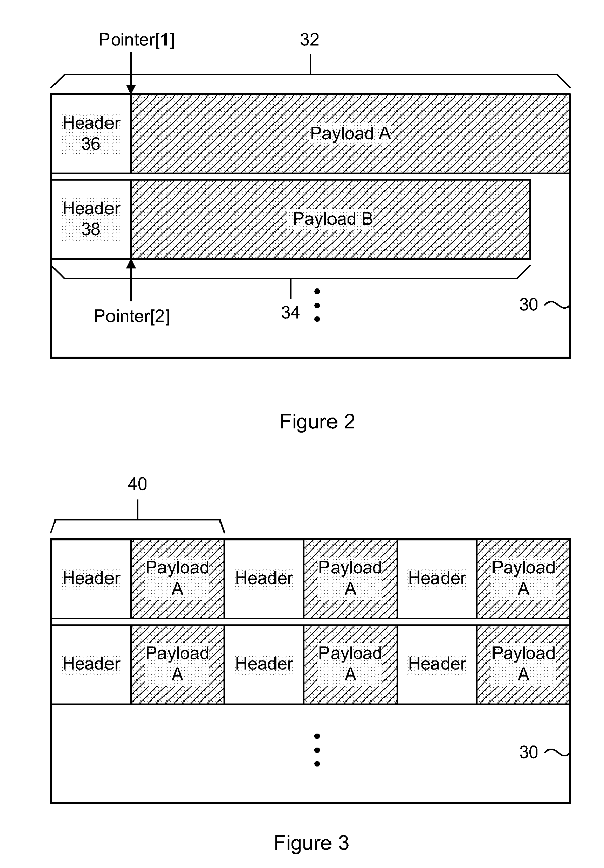

The following discussion herein relates solely to dynamic memory allocation. When memory is dynamically requested, the memory controller will first provide a specific portion of memory, such as a page, for use by the application. The application may then request one or more blocks within the page for storing data, where a block can be a predefined number of bytes or a specific number of requested bytes. When a block is requested by the application, the application will store a value corresponding to the actual size of the block in bytes. The purpose of storing this information is to allow the application to keep track of how much of the space within the allocated block is used up, so that it can request a larger memory block. as the need arises. In the YK compression algorithm for example, the data that needs to be stored can expand, eventually exceeding the capacity of the originally allocated memory block. In such a case, the allocated memory block can be released and a larger sized memory block can be allocated to the application in its place. If it is determined that the full capacity of the allocated memory block will never be used, then the allocated memory block can be released and a smaller memory block can be allocated in its place. Alternatively, the allocated memory block can be augmented by allocating one or more additional memory blocks to the application. Figure 2 is a conceptual illustration of the typical data structure of a data block dynamically allocated to an application in a page of memory.

Figure 2 shows a memory page **30** and two allocated blocks **32** and **34** within page **30.** By example, the memory page **30** can be 64k bytes in size. It is assumed in this example that addresses increase from the left side to the right side, and from the top to the bottom of page **30.** When the application makes a request for memory having size "A", the memory manager will first ensure that there sufficient room in the page, and then allocate a block having size "A". A pointer, referred to as Pointer[1] for this first block, is returned to the application. Pointer[1] indicates the starting address of the block the application can use. If another request by the application is made for memory having size "B", then a second block having size "B" is allocated, and Pointer[2] is returned to the application. Although the application requests memory having size "A" or "B", additional information is appended to blocks **32** and **34** in the form of headers **36** and **38.** Header's **36** and **38** include information regarding the size of the block it is appended to. This header can be 4 bytes long for example, and is considered overhead for the block. Hence, the data structure of an allocated memory has a payload portion for storing data, and a corresponding header portion.

The purpose of the header is now explained. When the application no longer needs either block **32** or **34** previously allocated to it, it will release the block and free it for later use. However, the memory manager must know the size of the block to be freed. Since the memory manager has the pointer to the beginning of the block to be freed, it will read the 4 preceding bytes of data to identify the size of the block. Therefore, the true size of the data block being used in the page **30** is the sum of the size of the requested payload space for storing data and the corresponding header. Accordingly, both the application and the memory manager will store a value corresponding to the size of the memory block. This data structure and general allocation scheme is ideally suited for applications where relatively large blocks of data are requested. For example, a typical application might request many blocks of memory each having a size of 128 bytes, therefore a 4 byte header represents approximately 3% overhead for the payload.

Unfortunately, this data structure is unsuitable for applications which request small blocks of memory, as will be further explained. A characteristic of the YK compression algorithm is the need to store many small blocks of data in a page of memory while executing its compression routine. A small block size can be between 6 bytes and 72 bytes for example. If a large proportion of blocks are 6 bytes in size for example, then a header 4 bytes in size accompanying the payload will contribute 40% overhead for the block. This means that a significant proportion of the page can be dedicated to storing header information, thereby reducing the effective memory available for storing actual data.

The general memory allocation scheme and examples described above assume that a page of memory is empty prior to allocation of memory blocks, which makes memory allocation straight-forward as the memory manager can progressively allocate sequential blocks of memory. An important feature of dynamic memory allocation is the ability to re-allocate freed blocks of memory within the page to one or more other applications. Unfortunately, there are inefficiencies in prior re-allocation schemes which add to the inefficiency of the header-based memory allocation scheme.

For example, the heap-based allocation scheme searches the memory for freed blocks of memory that are large enough to fit the requested block size. This scheme is processor intensive, and will negatively impact the performance of the system. The buddy block scheme maintains a linked list of free blocks, which can be memory intensive as the number of buddy blocks grows. The heap-based allocation scheme and the buddy block allocation scheme are well known in the art, and described in Fundamental Algorithms, Third Edition, Addison-Wesley, 1997, ISBN 0-201-89683-4, Section 2.4: Dynamic Storage Allocation, pp.435-456, authored by Donald Knuth.

Another inefficiency in most general purpose memory allocation schemes is wasted space, also called internal fragmentation. For example, the buddy block allocation scheme typically manages blocks in sizes that are powers of two. So if the application requests an amount that is not an exact power of two, there is wasted space in the allocated block that will never be used.

Therefore, the available memory is quickly consumed when a large number of small memory blocks are allocated to one or more applications. This can be seen as low memory usage efficiency since a relatively high proportion of the memory may not be used to store application data.

Unfortunately, the application may cease to run if no further memory can be allocated to it. While more memory can be added to the mobile device to alleviate the high rate of memory consumption, the additional cost, increased size and increased power consumption of the device may not be acceptable to the end user.

It is, therefore, desirable to provide a method and system for increasing the memory usage efficiency when dynamically allocating small blocks of memory to one or more applications.

### GENERAL

In accordance with the teachings provided herein, a system and method may be provided for dynamic memory allocation that reduces memory usage storage overhead.

As an example, the memory allocation system may include a memory having a page for storing data and a small block memory manager. The small block memory manager can allocate a plurality of fixed size memory blocks free of header information in the page in response to an application request for memory less than or equal to a maximum block size. The small block memory manager can maintain a freelist of fixed block sizes up to the maximum block size. The system can include a large block memory manager for allocating memory in the page according to a standard memory allocation scheme in response to the application request for memory greater than the maximum block size.

In another example, the method for dynamic allocation of memory in a page can include initializing a freelist having a plurality of block roots each corresponding to a plurality of fixed size memory blocks, receiving a request for memory of a predetermined size, and allocating a memory block having a size corresponding to one of the plurality of fixed size memory blocks in the page if the predetermined size is less than or equal to a largest fixed size block of the plurality of fixed size blocks.

An example of a dynamic memory allocation architecture can be one which includes a memory page and a freelist. The memory page can be subdividable into differently fixed size memory blocks free of header information in response to a memory request. Each of the differently fixed size memory blocks can store one of application data and a first pointer. The freelist can contain a plurality of block roots, where each of the plurality of block roots corresponds to one of the differently fixed size memory blocks. Each of the plurality of block roots can store one of a null pointer and a second pointer pointing to one fixed size memory block storing the first pointer.

Other aspects and features of the dynamic memory allocation embodiments will become apparent to those ordinarily skilled in the art upon review of the following description in conjunction with the accompanying figures.

### BRIEF DESCRIPTION OF THE DRAWINGS

Embodiments of the present invention will now be described, by way of example only, with reference to the attached Figures, wherein:
Fig. 1 is a block diagram of an exemplary embodiment of a mobile device;
Fig. 2 is a conceptual illustration of the typical data structure of a data block allocated from a page of memory;
Fig. 3 is an illustration of a memory page with small memory block allocations;
Fig. 4 is a conceptual illustration of the header-less dynamic memory allocation architecture, according to a present embodiment;
Fig. 5 is a block diagram of a memory manager for implementing the header-less dynamic memory allocation architecture, according to present embodiment;
Fig. 6 is a flow chart of a method for allocating header-less dynamic memory blocks, according to a present embodiment;
Fig. 7 is a flow chart of a method for adding free blocks to a freelist, according to a present embodiment;
Figs. 8a to 8d are illustrations of the structure of a memory page and a freelist after execution of steps of the method shown in Figure 7;
Fig. 9 is a flow chart of a method for removing free blocks from a freelist, according to a present embodiment; and,
Figs. 10a to 10c are illustrations of the structure of a memory page and a freelist after execution of steps of the method shown in Figure 9.

### DESCRIPTION OF PREFERRED EMBODIMENTS

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

The embodiments described herein generally relate to a mobile wireless communication device, hereafter referred to as a mobile device, which can be configured according to an IT policy. It should be noted that the term IT policy, in general, refers to a collection of IT policy rules, in which the IT policy rules can be defined as being either grouped or non-grouped and global or per-user. The terms grouped, non-grouped, global and per-user are defined further below. Examples of applicable communication devices include pagers, cellular phones, cellular smart-phones, wireless organizers, personal digital assistants, computers, laptops, handheld wireless communication devices, wirelessly enabled notebook computers and the like.

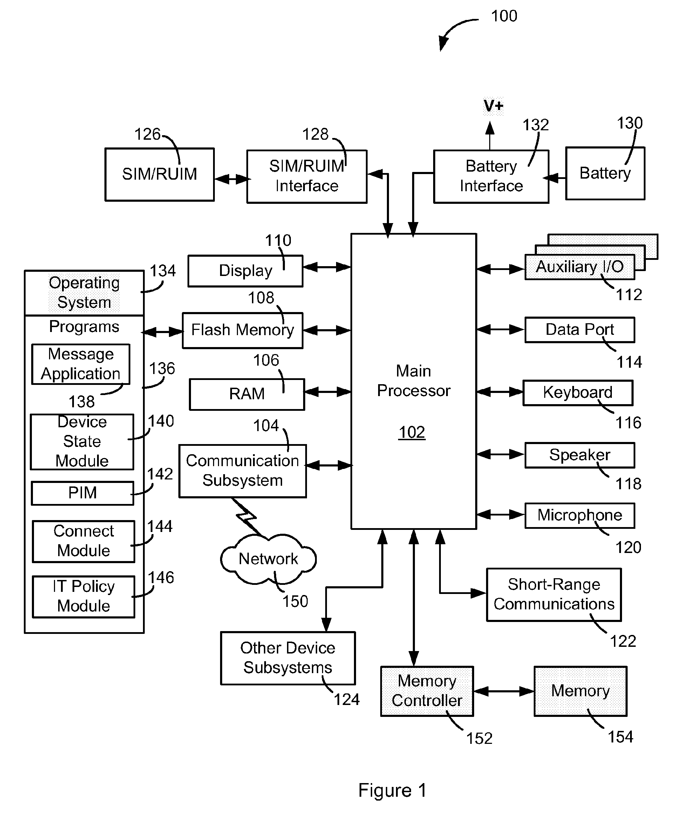

The mobile device is a two-way communication device with advanced data communication capabilities including the capability to communicate with other mobile devices or computer systems through a network of transceiver stations. The mobile device may also have the capability to allow voice communication. Depending on the functionality provided by the mobile device, it may be referred to as a data messaging device, a two-way pager, a cellular telephone with data messaging capabilities, a wireless Internet appliance, or a data communication device (with or without telephony capabilities). To aid the reader in understanding the structure of the mobile device, reference will now be made to Figure 1.

Referring first to FIG. 1, shown therein is a block diagram of an exemplary embodiment of a mobile device **100.** The mobile device **100** includes a number of components such as a main processor **102** that controls the overall operation of the mobile device **100.** Communication functions, including data and voice communications, are performed through a communication subsystem **104.** The communication subsystem **104** receives messages from and sends messages to a wireless network **150.** In this exemplary embodiment of the mobile device **100,** the communication subsystem **104** is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem **104** with the wireless network **150** represents one or more different Radio Frequency (RF) channels, operating according to defined protocols specified for GSM/GPRS communications. With newer network protocols, these channels are capable of supporting both circuit switched voice communications and packet switched data communications.

Although the wireless network **150** associated with mobile device **100** is a GSM/GPRS wireless network in one exemplary implementation, other wireless networks may also be associated with the mobile device **100** in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems.

The main processor **102** also interacts with additional subsystems such as a Random Access Memory (RAM) **106,** a flash memory **108,** a display **110,** an auxiliary input/output (I/O) subsystem **112,** a data port **114,** a keyboard **116,** a speaker **118,** a microphone **120,** short-range communications **122** and other device subsystems **124.**

Some of the subsystems of the mobile device **100** perform communication-related functions, whereas other subsystems may provide "resident" or on-device functions. By way of example, the display **110** and the keyboard **116** may be used for both communication-related functions, such as entering a text message for transmission over the network **150,** and device-resident functions such as a calculator or task list.

The mobile device **100** can send and receive communication signals over the wireless network **150** after required network registration or activation procedures have been completed. Network access is associated with a subscriber or user of the mobile device **100.** To identify a subscriber, the mobile device **100** requires a SIM/RUIM card **126** (i.e. Subscriber Identity Module or a Removable User Identity Module) to be inserted into a SIM/RUIM interface **128** in order to communicate with a network. The SIM card or RUIM **126** is one type of a conventional "smart card" that can be used to identify a subscriber of the mobile device **100** and to personalize the mobile device **100,** among other things. Without the SIM card **126,** the mobile device **100** is not fully operational for communication with the wireless network **150.** By inserting the SIM card/RUIM **126** into the SIM/RUIM interface **128,** a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM card/RUIM **126** includes a processor and memory for storing information. Once the SIM card/RUIM **126** is inserted into the SIM/RUIM interface **128,** it is coupled to the main processor **102.** In order to identify the subscriber, the SIM card/RUIM **126** can include some user parameters such as an International Mobile Subscriber Identity (IMSI). An advantage of using the SIM card/RUIM **126** is that a subscriber is not necessarily bound by any single physical mobile device. The SIM card/RUIM **126** may store additional subscriber information for a mobile device as well, including datebook (or calendar) information and recent call information. Alternatively, user identification information can also be programmed into the flash memory **108.**

The mobile device **100** is a battery-powered device and includes a battery interface **132** for receiving one or more rechargeable batteries **130.** In at least some embodiments, the battery **130** can be a smart battery with an embedded microprocessor. The battery interface **132** is coupled to a regulator (not shown), which assists the battery **130** in providing power V+ to the mobile device **100.** Although current technology makes use of a battery, future technologies such as micro fuel cells may provide the power to the mobile device **100.**

The mobile device **100** also includes an operating system **134** and software components **136** to **146** which are described in more detail below. The operating system **134** and the software components **136** to **146** that are executed by the main processor **102** are typically stored in a persistent store such as the flash memory **108,** which may alternatively be a read-only memory (ROM) or similar storage element (not shown). Those skilled in the art will appreciate that portions of the operating system **134** and the software components **136** to **146,** such as specific device applications, or parts thereof, may be temporarily loaded into a volatile store such as the RAM **106.** Other software components can also be included, as is well known to those skilled in the art.

The subset of software applications **136** that control basic device operations, including data and voice communication applications, will normally be installed on the mobile device **100** during its manufacture. Other software applications include a message application **138** that can be any suitable software program that allows a user of the mobile device **100** to send and receive electronic messages. Various alternatives exist for the message application **138** as is well known to those skilled in the art. Messages that have been sent or received by the user are typically stored in the flash memory **108** of the mobile device **100** or some other suitable storage element in the mobile device **100.** In at least some embodiments, some of the sent and received messages may be stored remotely from the device **100** such as in a data store of an associated host system that the mobile device **100** communicates with.

The software applications can further include a device state module **140,** a Personal Information Manager (PIM) **142,** and other suitable modules (not shown). The device state module **140** provides persistence, i.e. the device state module **140** ensures that important device data is stored in persistent memory, such as the flash memory **108,** so that the data is not lost when the mobile device **100** is turned off or loses power.

The PIM **142** includes functionality for organizing and managing data items of interest to the user, such as, but not limited to, e-mail, contacts, calendar events, voice mails, appointments, and task items. A PIM application has the ability to send and receive data items via the wireless network **150.** PIM data items may be seamlessly integrated, synchronized, and updated via the wireless network **150** with the mobile device subscriber's corresponding data items stored and/or associated with a host computer system. This functionality creates a mirrored host computer on the mobile device **100** with respect to such items. This can be particularly advantageous when the host computer system is the mobile device subscriber's office computer system.

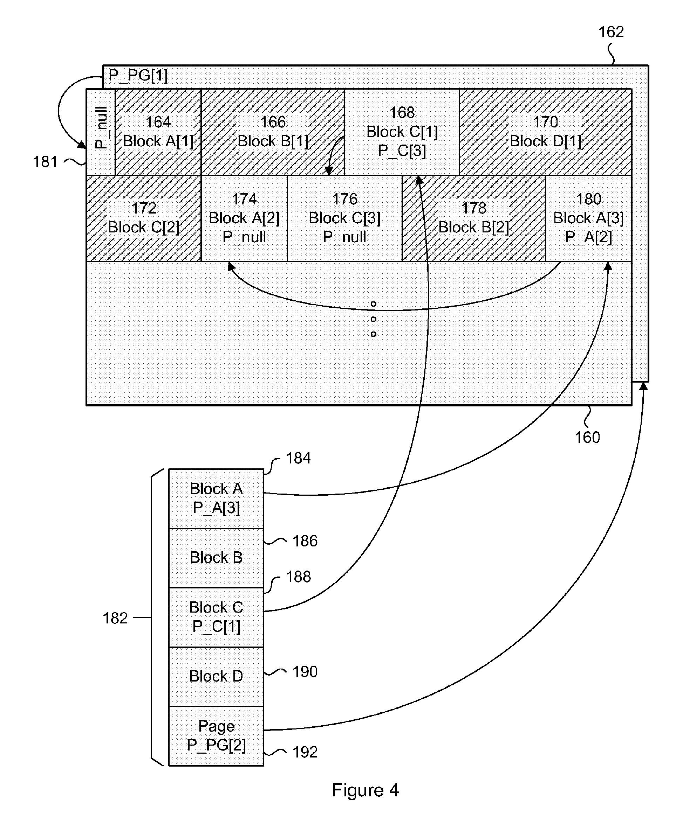

The mobile device **100** also includes a connect module **144,** and an IT policy module **146.** The connect module **144** implements the communication protocols that are required for the mobile device **100** to communicate with the wireless infrastructure and any host system, such as an enterprise system, that the mobile device **100** is authorized to interface with. Examples of a wireless infrastructure and an enterprise system are given in FIGS. 3 and 4, which are described in more detail below.

The connect module **144** includes a set of APIs that can be integrated with the mobile device **100** to allow the mobile device **100** to use any number of services associated with the enterprise system. The connect module **144** allows the mobile device **100** to establish an end-to-end secure, authenticated communication pipe with the host system. A subset of applications for which access is provided by the connect module **144** can be used to pass IT policy commands from the host system to the mobile device **100.** This can be done in a wireless or wired manner. These instructions can then be passed to the IT policy module **146** to modify the configuration of the device **100.** Alternatively, in some cases, the IT policy update can also be done over a wired connection.

The IT policy module **146** receives IT policy data that encodes the IT policy. The IT policy module **146** then ensures that the IT policy data is authenticated by the mobile device **100.** The IT policy data can then be stored in the flash memory **106** in its native form. After the IT policy data is stored, a global notification can be sent by the IT policy module **146** to all of the applications residing on the mobile device **100.** Applications for which the IT policy may be applicable then respond by reading the IT policy data to look for IT policy rules that are applicable.

The IT policy module **146** can include a parser (not shown), which can be used by the applications to read the IT policy rules. In some cases, another module or application can provide the parser. Grouped IT policy rules, described in more detail below, are retrieved as byte streams, which are then sent (recursively, in a sense) into the parser to determine the values of each IT policy rule defined within the grouped IT policy rule. In at least some embodiments, the IT policy module **146** can determine which applications are affected by the IT policy data and send a notification to only those applications. In either of these cases, for applications that aren't running at the time of the notification, the applications can call the parser or the IT policy module **146** when they are executed to determine if there are any relevant IT policy rules in the newly received IT policy data.

All applications that support rules in the IT Policy are coded to know the type of data to expect. For example, the value that is set for the "WEP User Name" IT policy rule is known to be a string; therefore the value in the IT policy data that corresponds to this rule is interpreted as a string. As another example, the setting for the "Set Maximum Password Attempts" IT policy rule is known to be an integer, and therefore the value in the IT policy data that corresponds to this rule is interpreted as such.

After the IT policy rules have been applied to the applicable applications or configuration files, the IT policy module **146** sends an acknowledgement back to the host system to indicate that the IT policy data was received and successfully applied.

Other types of software applications can also be installed on the mobile device **100.** These software applications can be third party applications, which are added after the manufacture of the mobile device **100.** Examples of third party applications include games, calculators, utilities, etc.

The additional applications can be loaded onto the mobile device **100** through at least one of the wireless network **150,** the auxiliary I/O subsystem **112,** the data port **114,** the short-range communications subsystem **122,** or any other suitable device subsystem **124.** This flexibility in application installation increases the functionality of the mobile device **100** and may provide enhanced on-device functions, communication-related functions, or both. For example, secure communication applications may enable electronic commerce functions and other such financial transactions to be performed using the mobile device **100.**

The data port **114** enables a subscriber to set preferences through an external device or software application and extends the capabilities of the mobile device **100** by providing for information or software downloads to the mobile device **100** other than through a wireless communication network. The alternate download path may, for example, be used to load an encryption key onto the mobile device **100** through a direct and thus reliable and trusted connection to provide secure device communication.

The data port **114** can be any suitable port that enables data communication between the mobile device **100** and another computing device. The data port **114** can be a serial or a parallel port. In some instances, the data port **114** can be a USB port that includes data lines for data transfer and a supply line that can provide a charging current to charge the battery **130** of the mobile device **100.**

The short-range communications subsystem **122** provides for communication between the mobile device **100** and different systems or devices, without the use of the wireless network **150.** For example, the subsystem **122** may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download will be processed by the communication subsystem **104** and input to the main processor **102.** The main processor **102** will then process the received signal for output to the display **110** or alternatively to the auxiliary I/O subsystem **112.** A subscriber may also compose data items, such as e-mail messages, for example, using the keyboard **116** in conjunction with the display **110** and possibly the auxiliary I/O subsystem **112.** The auxiliary subsystem **112** may include devices such as: a touch screen, mouse, track ball, infrared fingerprint detector, or a roller wheel with dynamic button pressing capability. The keyboard **116** is preferably an alphanumeric keyboard and/or telephone-type keypad. However, other types of keyboards may also be used. A composed item may be transmitted over the wireless network **150** through the communication subsystem **104.**

For voice communications, the overall operation of the mobile device **100** is substantially similar, except that the received signals are output to the speaker **118,** and signals for transmission are generated by the microphone **120.** Alternative voice or audio I/O subsystems, such as a voice message recording subsystem, can also be implemented on the mobile device **100.** Although voice or audio signal output is accomplished primarily through the speaker **118,** the display **110** can also be used to provide additional information such as the identity of a calling party, duration of a voice call, or other voice call related information.

The mobile device of Figure 1 further includes a memory controller **150** and a memory **152.** One function of memory controller **150** is to allocate portions of memory **152** to the main processor **102,** upon request by an application. Memory **152** can be used for dynamic, static and transient data storage, and can be implemented as volatile memory, such as dynamic random access memory (DRAM) or static random access memory (SRAM).

Generally, the dynamic memory allocation embodiments provide a method and system for managing the allocation of memory to one or more applications. The header-less dynamic memory allocation architecture includes a method of allocating differently fixed size memory blocks to a requesting application, each of the fixed size memory blocks being free of header information to maximize memory usage. Free, or unused memory blocks released by the application, having the same fixed size are maintained in a freelist. The freelist has a number of block roots corresponding to the number of differently fixed size memory blocks. Each block root stores a root pointer to a free memory block previously allocated to the application. To conserve memory, each unused memory block will store branch pointers to other identically sized unused memory blocks, thereby forming a sequential chain of unused memory blocks with the block root. Therefore, applications requesting the same sized memory block can re-use previously allocated fixed size memory blocks.

The embodiments of the dynamic allocation system and method are particularly suited for applications that request the same fixed size memory blocks within a range of quantized sizes with high frequency. By re-using previously allocated fixed size memory blocks, fragmentation can be minimized while high utilization of the memory can be achieved.

Figure 4 is a conceptual illustration of an embodiment of the dynamic memory allocation architecture after one or more applications have requested blocks of memory. The physical memory available to a mobile device, or any device using memory, can be logically divided into one or more memory pages, such as memory pages **160** and **162.** In the following discussion, only memory page **162** will be described in detail.

Memory page **160** represents the memory space available for use by one or more applications running on the device. After a number of memory block requests, the memory page **160** will be subdivided into a plurality of memory blocks, such as memory blocks **164, 166, 168, 170, 172, 174, 176, 178** and **180** for example. Hence, the memory page **160** can include allocated blocks in use by the application, previously allocated memory blocks released by the application, and un-allocated memory space. Each of the memory blocks have predetermined sizes, and there are a limited number of different predetermined sizes which can be allocated. Each of the memory blocks is header-free, meaning that there is no additional overhead information appended to the memory block. Therefore, an allocated memory block of a predetermined size will occupy exactly that predetermined size in memory page **160.** In the presently shown example, there are four different block sizes. These are referred to as Block A, Block B, Block C and Block D. The numeral in square brackets indicates an instance of a particular block size in memory page **160.** For example, memory blocks **164, 174** and **180** are all Block A memory blocks. A reserved area in memory page **160** is page pointer block **181,** which is used to store pointer information to another memory page. Further details of this feature will be discussed later.

The other component of the header-less dynamic memory allocation architecture of the present embodiment is the freelist **182.** The freelist **182** is a set of all the predetermined block sizes available for allocation to the application, and maintains a list of all memory blocks of the same size that are released/freed by the application for subsequent allocation. For example, the predetermined block sizes can be preset to be integer multiples of a unitary block size, where the unitary block size can be any number of bytes. If m is a unitary block of bytes, then one set of predetermined block sizes can have linearly increasing block sizes: 1m, 2m, 3m, 4m etc. Alternatively, the set of predetermined block sizes can have geometrically or exponentially increasing block sizes. While the predetermined block sizes can follow a mathematical pattern based on a unitary block size, the block sizes can be determined from test analysis of most commonly requested block sizes requested by an application, thereby resulting in a distribution of block sizes having any number of bytes. In the case where more than one page of memory is allocated, freelist **182** can maintain a list of all memory pages that have been allocated to the application. In an alternate embodiment, a separate page linked list can be used for storing a pointer to the first memory page. The freelist **182** is stored in another area of memory, and has a fixed size. In one embodiment, the freelist **182** can be stored in static memory since the size of the freelist **182** will be known and fixed upon initialization of the application. Using the current example where there are four different block sizes available, freelist **182** will consist of four block roots **184, 186, 188** and **190,** each corresponding to block sizes Block A, Block B, Block C and Block D respectively. Each block root stores either a null pointer or a root pointer. A null pointer indicates that there are no free blocks corresponding to that block size, while root pointer points to a free block in memory page **160.**

The relationship between the memory blocks of memory page **160** and freelist **182** is now described. Each memory block in memory page **160** stores application data when in use by the application, or a pointer when released by the application. Application data is strictly used by the application which requested the memory block. The pointer in the memory block can be either a null pointer, meaning that there are no further free blocks corresponding to that block size, or a branch pointer. A branch pointer points to a location of the next free memory block having the same size. If a free block stores a branch pointer, then there will be a pointer to this free block stored in the block root or another free block. Therefore, a sequential linked-list chain of pointers from the block root to any number of free blocks in memory page **160** can be formed.

The function of page root **192** differs somewhat from the above-described block roots. The purpose of page root **192** is to maintain a linked list of memory pages that have been allocated by the memory manager, thereby allowing it to free the memory pages when the application is finished and un-initializes the memory manager. According to an embodiment, page root **192** will store a page pointer pointing to the most recently allocated memory page. This most recently allocated memory page can include either a null pointer indicating that there are no further allocated memory pages, or a branch pointer pointing to a previously allocated memory page. Therefore, a sequential linked-list chain of pointers from the page root to any number of memory pages can be formed.

If overall memory usage by the device reaches a maximum predetermined threshold, one or more memory pages allocated to the application can be released. It should be noted that the application, by default, will always retain one memory page. The memory manager can execute a page release algorithm to first verify that all memory blocks in the memory page are in the freelist **182** before releasing the memory page. Those skilled in the art will understand that different techniques can be used for verifying an "empty" memory page. For example, the application can be queried to return at least one pointer to a memory block in use in the target memory page. The presence of at least one pointer indicates that the memory page is in use, otherwise, no data is being stored in the target memory page. The freelist can then be updated to remove released memory blocks residing in the target memory page for preventing re-allocation to the target memory page. The linked list of page pointers can be then be updated to reflect the removal of the target memory page.

Using the current example shown in Figure 4, it is assumed that memory blocks **168, 174, 176** and **180** are released during the operation of the application. Since memory blocks **174** and **180** are both Block A in size, they will be linked to block root **184.** In this example, block root **184** stores root pointer P_A[3], which points to the location of memory block **180** in memory page **160.** Memory block **180** in turn will store branch pointer P_A[2], which points to the location of memory block **174** in memory page **160.** Memory block **174** in turn will store a null pointer as there are no further free blocks of the same size. Similarly, block root **188** stores root pointer P_C[1], which points to the location of memory block **168.** Memory block **168** in turn will store branch pointer P_C[3], which points to the location of memory block **176** in memory page **160.** Finally, memory block **176** in turn will store a null pointer as there are no further free blocks of the same size.

With regard to the page root **192,** it will initially store pointer P_PG[1] to memory page **160.** If new memory page **162** is allocated, as is shown in Figure 4, then page root **192** will store pointer P_PG[2] to memory page **162.** Memory page **162** will then store a branch pointer P_PG[1] to memory page **160** in page pointer block **181,** and the page pointer block **181** of memory page **160** will store the null pointer P_null. The page pointer block **181** can be stored within the first several bytes at the beginning of the memory page.

An immediately seen advantage of the dynamic memory allocation architecture embodiment is the minimized fragmentation of memory page **160.** If the application tends to use the same sized memory block with high frequency, then previously allocated memory blocks can be re-used. Another advantage is the re-use of the freed memory blocks for maintaining the freelist of released memory blocks, by storing pointers to subsequent free memory blocks. This means that the freelist itself will never be burdened with storing a growing number of pointers, as the pointers are stored in memory page **160.**

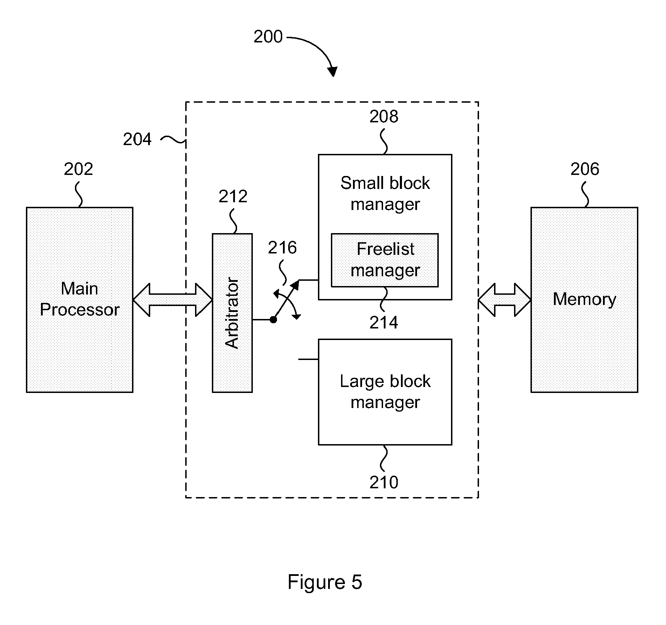

Now having described the aspects of the header-less dynamic memory allocation architecture, following will be a discussion of the components in the mobile device and their function in the dynamic memory allocation architecture according to one embodiment. Figure 5 is a block diagram of some of the components of a mobile device **200** configured for the dynamic memory allocation architecture, according to one embodiment. Mobile device **200** can generally correspond to mobile device **100** shown in Figure 1, with many of the previously shown components omitted in order to simplify the drawing.

Mobile device **200** includes a main processor **202,** a memory manager **204,** and memory **206.** Main processor **202** executes application programs that request memory from memory **206**, store and read data from memory **206,** and release unused memory to the system. Depending on the application, requested memory can be a specific number of bytes, or can be one of a number of predetermined differently sized blocks of memory. The application can be configured to request these fixed size memory blocks. Memory manager **204** is generally responsible for managing data being written to and read from memory **206.** Of course, memory manager **204** is further responsible for allocating memory pages and memory blocks to the applications and for keeping track of free blocks of memory.

According to an embodiment of the dynamic memory allocation system, memory manager includes a small block manager **208,** a large block manager **210** and a block request arbitrator **212.** Small block manager **208** includes a freelist manager **214.** Small block manager **208,** large block manager **210** and block request arbitrator **212** can be executable software/firmware algorithms. In the presently shown embodiment, requests for memory sized below or equal to a predetermined threshold, will be controlled by the small block manager **208,** while requests for memory sized above the predetermined threshold are controlled by the large block manager **208.** The predetermined threshold can be set to a value based on testing of the application and statistical analysis of memory block requests by the application. For example, the threshold can be selected such that the most commonly requested block sizes are less than the threshold. Since this threshold can be related to the predetermined set of block sizes, the selection of the threshold can be for example, an optimal balance between minimizing the size of the corresponding freelist and maximizing requests for the predetermined block sizes by the application. As previously discussed, the freelist is stored in static memory, hence minimizing the number of block roots of the freelist will reduce static memory consumption. The block request arbitrator **212** is responsible for determining which manager to use in response to the memory request from the application. This is done by forwarding the memory request to one of the two memory managers **208** and **210.** A switch circuit **216** connected to block request arbitrator **212** conceptually illustrates the selection function of block request arbitrator **212.**

If the memory being requested is below the predetermined threshold, then the small block manager **208** will allocate memory in accordance with the dynamic memory allocation architecture shown in Figure 4. Preferably, the predetermined threshold is set based on some previous knowledge of the memory request patterns of one or more applications run by main processor **202.** For example, if the YK compression algorithm frequently requests memory between 6 bytes and **72** bytes in size when compressing English language text, then the predetermined threshold can be set to a maximum of **72** bytes. The predetermined threshold can be dynamically set according to the application being run, and in the case of the YK compression algorithm, the specific task. For example, the task may be to compress French language text instead of English language text, hence the predetermined threshold may differ due to characteristics of the language being compressed.

As previously mentioned, the application can request either a specific size of memory, or one of a plurality of fixed size memory blocks. In the present embodiment, small block manager **210** will allocate fixed size memory blocks to the application. If the application requests a specific size of memory, then small block manager **210** can allocate the smallest fixed size memory block that is at least the requested specific size of memory.

The freelist manager **214** is responsible for initializing the freelist, such as freelist **182** in Figure 4, and in particular the number of block roots and the page root in the freelist. Initializing the freelist can include setting the number of block roots to correspond with the number of fixed size memory blocks that will be used, when an application is initiated. Initializing can including storing the page pointer to the allocated page into the page root **192 .** The number of fixed size memory blocks, and the size of each fixed size memory block, can be set to correspond with the predetermined threshold, as the predetermined threshold can be set according to the application and/or specific task of the application. This can be referred to as a freelist profile. Upon startup of the application, the freelist manager **214** sets all block roots to store a null pointer, meaning that there are no free blocks having a size corresponding to the block roots. As the application executes, allocated fixed size memory blocks will be released. It is then the responsibility of the freelist manager **214** to coordinate the storage of pointers in the free blocks, and the maintenance of the pointers when free blocks are re-allocated to the application.

On the other hand, if the memory being requested is greater than the predetermined threshold, then the large block manager **210** will allocate memory in accordance with any one of well known memory allocation schemes. Such schemes can include previously described heap-based allocation scheme and the buddy-block allocation scheme, for example.

In the above described embodiment of the freelist, a predetermined number of block roots each corresponding to a different fixed size memory block is initialized upon startup of the application. This can be referred to as a static freelist, which by itself will occupy a specific amount of memory for storing root pointers. If specifically sized memory blocks are never allocated and thus never released to the freelist, then there is no need to have a corresponding block root in the freelist. For a specific task of an application, the memory manager can keep track of the fixed size memory blocks being requested by the application for the duration of the task. For example, the YK compression algorithm may be compressing a CNN webpage and the memory manager determines that six of the fixed size memory blocks are never requested. Therefore, the next time the same or similar CNN webpage is compressed, the memory manager can exclude the block roots corresponding to those six fixed size memory blocks from the freelist. This can be referred to as a dynamic freelist. Should an excluded memory block size be requested by the application, the small block manager **208** can allocate the next larger fixed size memory block that can be allocated, or the block request arbitrator **212** can pass the request to the large block manager **210.** Furthermore, the fact that the particular fixed size block has been requested can trigger the memory manager to generate an updated dynamic freelist for the next execution of the application. Accordingly, the block root corresponding to the previously excluded fixed size block can be included in the freelist for use with the next execution of the application.

The present example uses statistical data from a single historical task for generating a dynamic freelist, but any number of historical tasks can be monitored before a dynamic freelist is generated. This can be referred to as a training period for the application, which can be arbitrarily set. Additionally, this historical data can be compiled offline based on testing, and then periodically uploaded to the memory manager. This data can be included in the freelist profile.

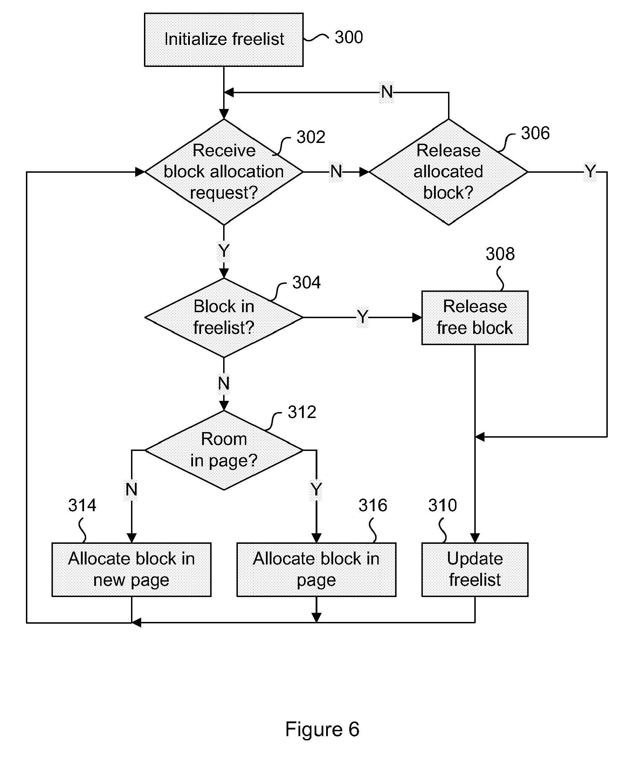

Following is a discussion of the operation of the small block manager 208 shown in Figure 5. Small block manager 208 is responsible for setting up and maintaining the header-less dynamic memory allocation architecture shown in Figure 4. A flow chart outlining the dynamic memory allocation method according to another embodiment is shown in Figure 6.

Figure 6 is a flow chart of a method exemplifying an embodiment of the algorithm for managing the allocation of memory blocks and the freelist, in response to a request for memory and an instruction for releasing an allocated memory block. While the small block manager 208 can execute other algorithms of a standard memory manager, only the algorithm above will be described. The header-less dynamic memory allocation algorithm starts after the application has been initiated, and it is assumed that one page of memory is initially available for use.

At step 300, a particular freelist profile is initialized corresponding to the application and/or task, and a memory page is allocated. A pointer to the allocated memory page will be stored in page root 192 of freelist 182, and null pointers are stored in the block roots of freelist 182. The algorithm waits until a memory block request less than or equal to the predetermined threshold is received at step 302, and then proceeds to step 304. This can be referred to as a valid request. Otherwise, if the memory request is greater than the predetermined threshold, one of the standard dynamic memory allocation schemes is used. If an instruction to release a memory block is received, then the algorithm proceeds to step 306. It is noted that a memory release operation can include releasing a memory block or a memory page. If neither a memory request or memory release operation is received, then the algorithm loops back to step 302. Returning to the case where a memory block request is received at step 302, if the memory request is for a specific number of bytes, the small block manager 208 can assign the smallest fixed size memory block having a size at least that of the memory request. A determination is made at step 304 to check if there is a free memory block having the same size in the freelist. This is done by looking up the corresponding block root in the freelist and reading the stored pointer. If the block root stores the null pointer, then there is no free memory block of the requested memory block size. On the otherhand, if the block root stores a root pointer, then a correspondingly sized free block is available.

In the case that a free memory block is available, the algorithm proceeds to step **308** to allocate the free memory block to the application. In other words, the free memory block is re-allocated to the application. Then the freelist is updated at step **310** to reflect the removal of the free memory block from the freelist. In the event that a free memory block is not available, the algorithm proceeds to step **312** to check if there is sufficient room left in the page for allocating the requested fixed size memory block. If there is insufficient room left in the current page, then a new page is allocated in step **314,** and the requested fixed size memory block is allocated to the application. When the new memory page is allocated, the root page in the freelist can be updated in the manner previously described for keeping track of the allocated memory pages. Otherwise, the requested fixed size memory block is allocated to the current page in step **316.** It is noted that the freelist is shared amongst any number of memory pages, and those skilled in the art will understand that any pointer can include hierarchical information relating to the page a particular memory block resides in. Allocation of the memory block is achieved by returning a pointer to the beginning of the block to the application. Returning to step **306,** if an instruction for releasing a memory block is received, then the freelist is simply updated at step **310.** If an instruction for releasing a memory page is received, then the previously described page release algorithm can be executed. Further details regarding the freelist update algorithm will be described later. Following steps **310, 314** and **316,** the algorithm loops back to step **302** for the subsequent memory request or memory release operation.

Details of the freelist management algorithm embodiment is now discussed. There are two sub processes executed by the algorithm, which can both be executed by the freelist manager **214** in Figure 5. One is the memory block link algorithm and the other is the memory block re-allocation algorithm. The memory block link algorithm is responsible for keeping track of every fixed size memory block released by the application. The memory block re-allocation algorithm is responsible for allocating one of these released memory blocks to the application.

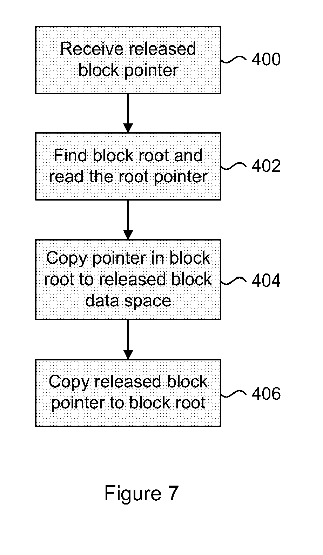

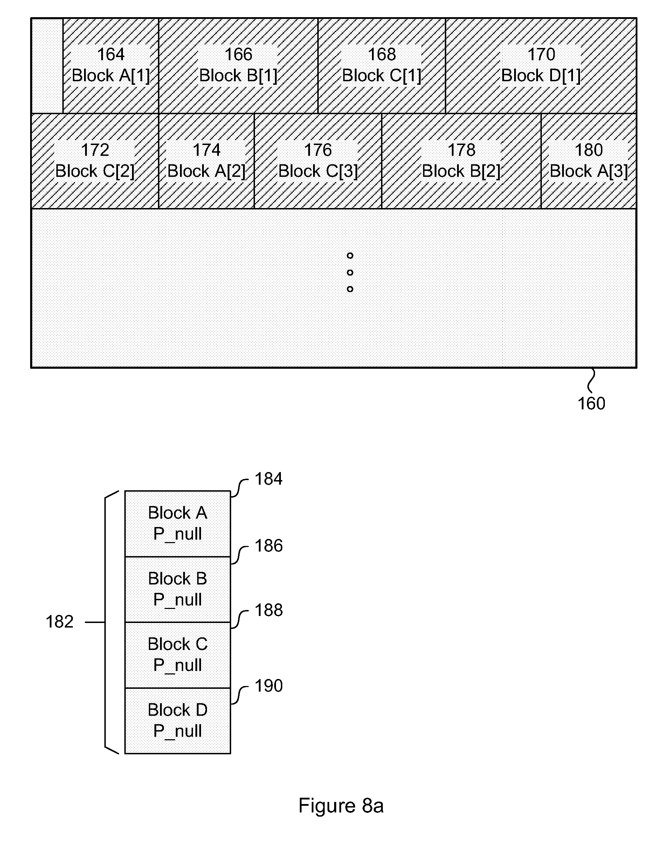

Figure 7 is a flow chart of a method exemplifying an embodiment of the memory block link algorithm. Figures 8a to 8c are accompanying examples of the structure of memory page **160** and freelist **182** of Figure 4 in different states, after steps of the algorithm of Figure 7 have been executed. In the following examples of the structure of memory page **160** and freelist **182,** it is assumed that only one memory page is being used, and hence it is not necessary to show page root **192** in freelist **182.** It will be assumed that page root **192** will store a root page pointer to memory page **160.** In this example, the application will release block **176.** It is assumed that freelist **182** has been initialized and includes null pointers, and memory page **160** has the allocated block structure as shown in Figure 8a. All memory blocks **164** to **180** have been allocated.

As the application executes its operations, it can release a fixed size memory block. This is done by releasing the corresponding pointer to the beginning of the block to freelist manager **214.** As discussed earlier, the application will have stored block size information corresponding to the particular pointer. Hence when a specific pointer is released, this size information is provided to the freelist manager **214.** The algorithm starts at step **400** when the freelist manager receives the memory block pointer (P_C[3]) for memory block **176.** Following at step **402,** the block root corresponding to the size of the released memory block pointer is identified and the pointer stored therein is read. The released memory block can be mapped to the corresponding block root through a variety of known techniques. For example, a hash table associating a particular memory block size with a block root can be used. Alternately, a linear search where all the block roots are sequentially searched for a value corresponding to the desired block size can be executed. Those skilled in the art will understand that other search techniques can be used with equal effectiveness.

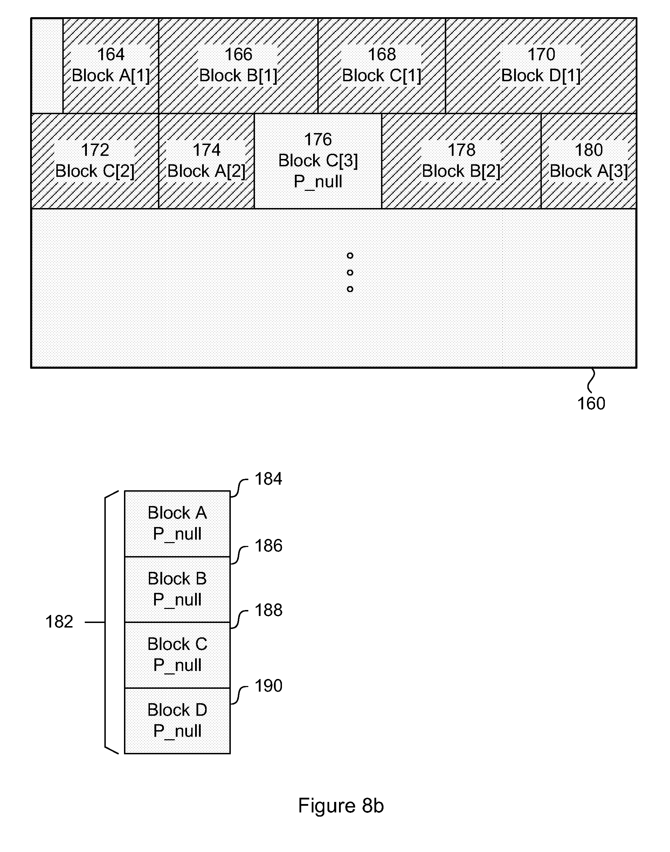

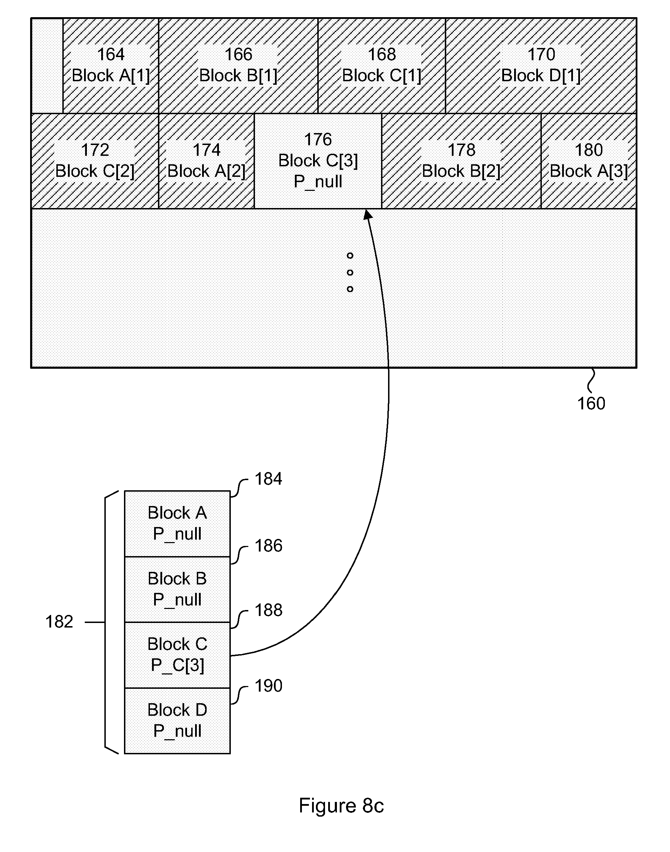

As previously mentioned, the pointer can be either a root pointer or a null pointer. The freelist manager **214** will have associated the released block pointer P_C[3] to a fixed size memory block, that is, a Block C size. Therefore, corresponding block root **188** for Block C size is identified and null pointer P_null stored therein is read. At step **404,** the null pointer (or root pointer) in the block root is copied into the presently released free block space. As shown in Figure 8b, null pointer P_null is copied into memory block **176** after step **404** is executed. Then at step **406,** the pointer P_C[3] of the presently released memory block **176** is copied into the block root **188.** After step **406,** memory block **176** is added to the freelist **182,** since block root **188** now stores the pointer to it. Figure 8c shows the new link between the freelist **182** and free memory block **176.**

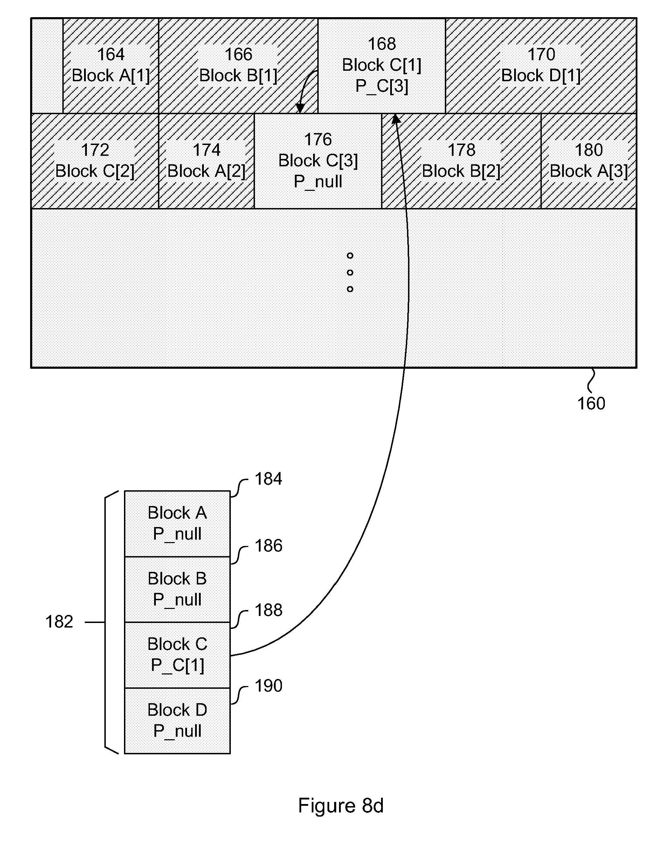

According to the present algorithm, all released memory blocks are added to the head of the list. The head of the list is the first free memory block pointed to by the root pointer. For example, if the application subsequently releases memory block **168,** steps **400** to **406** are repeated, resulting in the structure of memory page **160** as shown in Figure 8d. In Figure 8d, memory block **168** is pointed to by the root pointer in block root **188** while memory block **168** stores the branch pointer to the other free memory block **176.** Memory block **176** stores the null pointer to indicate that there are no further free memory blocks for this fixed size memory block. Therefore, the freed memory block space in memory page **160** is effectively re-used for storing pointer information. In other embodiments, however, other methods may be used for adding the block to the list. For example, the block could be added as the last element of the list.

While the previously discussed embodiment presumes that the application stores block size information for requested memory blocks, certain applications do not have to store such information and can instead infer the size of the memory blocks from application specific information. For example, if the YK compression algorithm uses 6 byte memory block units, and a pattern appears 8 times, the application will have allocated 8 blocks for a total of 48 bytes. The YK algorithm keeps the information in these 8 blocks sorted in order to facilitate a binary search to find the information it needs. To perform a binary search, the application will need to know the number of blocks to search. Therefore, the number of blocks will be stored. Hence if there are a total of 48 bytes stored for a pattern and 8 blocks allocated, then the application can infer that the block is 6 bytes in size. This is one possible method of inferring block size, and every application may have a unique method specific to the way it uses the memory. In either case, the application is able to provide information relating to the size of the memory block to be released.

The free memory block link algorithm shown in Figure 7 and the examples shown in Figures 8a to 8c illustrate how released memory blocks can be tracked using any number of pointers, without needing to allocate storage space for the freelist. To minimize fragmentation of memory page **160,** the memory blocks in freelist **182** can be re-allocated to the application using the memory block re-allocation algorithm. Although root page **192** does not track released memory pages, updating the linked list of memory pages as they are allocated would follow the same algorithm shown in Figure 7.

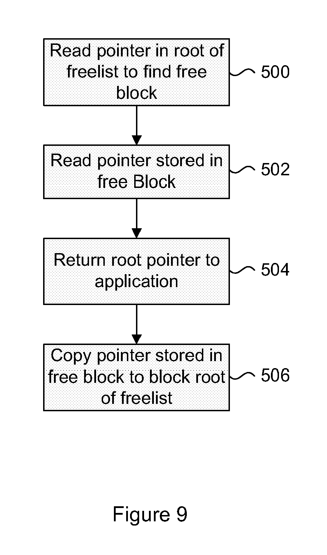

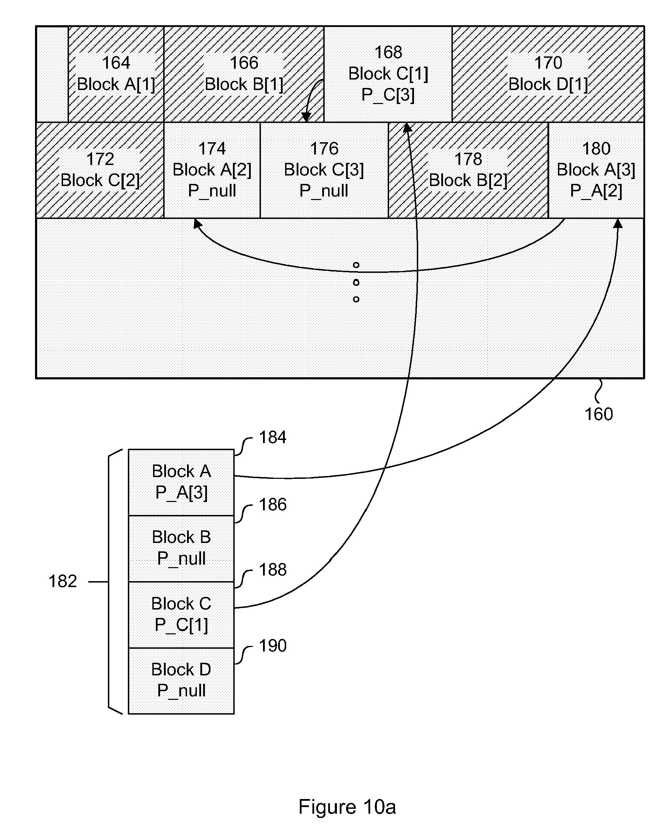

Figure 9 is a flow chart of a method exemplifying an embodiment of the memory block re-allocation algorithm. Figures 10a to 10c are accompanying examples of the structure of memory page **160** and freelist **182** of Figure 4 in different states, after steps of the algorithm of Figure 9 have been executed. In the present example, it is assumed that memory page **160** and freelist **182** have the structure shown in Figure 10a.

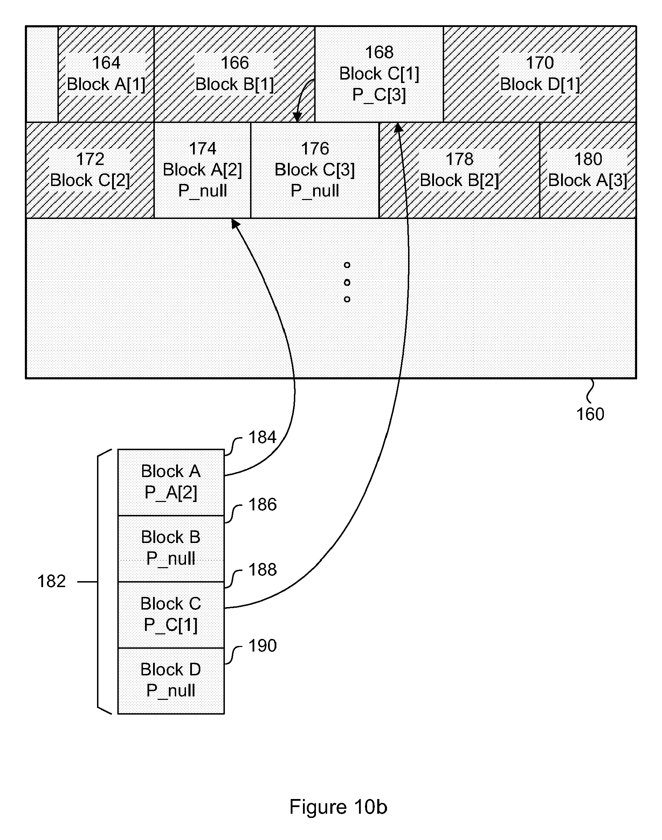

The application can request memory blocks having the same fixed size any number of times during its lifetime. When the small block manager **208** receives the memory request, the freelist manager **214** is tasked with checking the freelist to see if there is a same fixed size memory block in freelist **182.** In the present example, the application requests a memory block having a Block A size. In step **500** of the algorithm, the corresponding block root **184** for Block A is identified and its pointer is read. Block root **184** stores root pointer P_A[3] pointing to free memory block **180.** At step **502,** the branch pointer P_A[2] stored in memory block **180** is read, and the root pointer P_A[3] is returned to the application at step **504.** Now branch pointer P_A[2] is copied to block root **184** at step **506,** resulting in the memory page and freelist structure shown in Figure 10b.

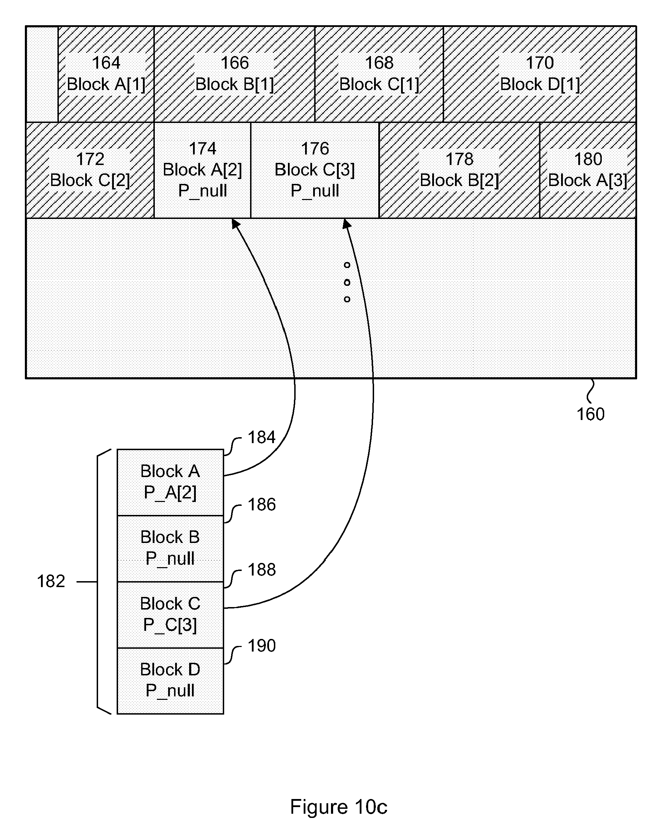

If a memory block having a Block C size is subsequently requested by the application, then steps **500** to **506** are repeated. The free memory block at the head of the list, that being memory block **168,** is re-allocated to the application. Now block root **188** stores pointer P_C[3], which was the next free block in the list. The resulting structure of memory page **160** and freelist **182** is shown in Figure 10c.

As shown in the previously described embodiments and illustrated by the shown examples, the dynamic memory allocation algorithm of Figure 6 will provide a memory page allocation structure in which only data is stored in the memory page **160.** The freelist management algorithms ensure that memory page utilization is maximized by maintaining a list of fixed size memory blocks that have been freed, and re-allocating the freed fixed size memory blocks. Once the application has completed its task, the memory page(s) and the allocated memory for the freelist can be released to the system.

To validate the effectiveness of the presently described header-less dynamic memory allocation architecture, the dynamic memory usage and overall memory usage of a memory device has been compared to that of the buddy heap memory allocation scheme. When the same page of text is compressed with the YK compression algorithm, the static heap memory and transient heap memory in both schemes are substantially the same. However, the dynamic memory used by the header-less dynamic memory allocation architecture is about half the amount used by the buddy heap scheme.

In the preceding description, for purposes of explanation, numerous details are set forth in order to provide a thorough understanding of the embodiments of the dynamic memory allocation system and method. However, it will be apparent to one skilled in the art that these specific details are not required in order to practice these embodiments. In other instances, well-known electrical structures and circuits are shown in block diagram form in order not to obscure the embodiments. For example, specific details are not provided as to whether the embodiments described herein are implemented as a software routine, hardware circuit, firmware, or a combination thereof.

Embodiments of the dynamic memory allocation method can be represented as a software product stored in a machine-readable medium (also referred to as a computer-readable medium, a processor-readable medium, or a computer usable medium having a computer-readable program code embodied therein). The machine-readable medium can be any suitable tangible medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an embodiment. Those of ordinary skill in the art will appreciate that other instructions and operations necessary to implement the described embodiments can also be stored on the machine-readable medium. Software running from the machine-readable medium can interface with circuitry to perform the described tasks.

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyrights whatsoever.

The above-described embodiments are intended to be examples only. Alterations, modifications and variations can be effected to the particular embodiments by those of skill in the art without departing from the scope of the invention, which is defined solely by the claims appended hereto.

## Claims

1. A memory allocation system comprising a memory (22) having a page (160) for storing data, the system having:
a small block memory manager (208) for allocating a plurality of fixed size memory blocks (164, 166, 168, 170) free of header information in the page (160) in response to an application request for memory less than or equal to a maximum block size, the small block memory manager (208) maintaining a freelist (182) of fixed block sizes up to the maximum block size.

2. The memory allocation system of claim 1, further comprising a large block memory manager (210) for allocating memory in the page (160) according to a standard memory allocation scheme in response to an application request for memory greater than the maximum block size.

3. The memory allocation system of claim 2, further comprising a block request arbitrator (212) for selectively providing the application request for memory to the small block memory manager (208) or the large block memory manager (210) in response to a size of requested memory.

4. The memory allocation system of any one of claims 1 to 3, wherein the small block memory manager (208) comprises
a freelist manager (214) for maintaining the freelist (182), the freelist (182) having block roots (184, 186, 188, 190) corresponding to each of the plurality of fixed size memory blocks, the freelist manager (214) being arranged to link free memory blocks having a common size to one corresponding block root (184, 186, 188, 190), the free memory blocks corresponding to released fixed size memory blocks having the common size.

5. The memory allocation system of claim 4, wherein the one corresponding block root (184, 186, 188, 190) is arranged to store a null pointer or a root pointer to one of the free memory blocks.

6. The memory allocation system of claim 5, wherein each of the free memory blocks is arranged to store the null pointer or a branch pointer to another of the free memory blocks.

7. The memory allocation system of any one of claims2 to 6, wherein the standard memory allocation scheme comprises a heap-based allocation scheme or a buddy-block allocation scheme.

8. The memory allocation system of any one of the preceding claims1, wherein the maximum block size is dynamically set by the application for a specific task or is set to correspond to the application.

9. The memory allocation system of any one of the preceding claims, wherein each size of the plurality of fixed size memory blocks is set by the application.

10. The memory allocation system of any one of claims 4 to 6, wherein the freelist (182) comprises a page root (192) for storing a root page pointer pointing to the page (160).

11. The memory allocation system of claim 10, wherein the page (160) stores a null pointer or a branch pointer to another page (162).

12. A method for dynamic allocation of memory in a page (160) in response to receiving a request (302) for memory of a predetermined size, the method comprising the steps of:
initializing (300) a freelist (182) having a plurality of block roots (184, 186, 188, 190) each corresponding to a plurality of fixed size memory blocks (164, 166, 168, 170) prior to receiving the request (302) for memory; and,
allocating (314, 316) a memory block having a size corresponding to one of the plurality of fixed size memory blocks (164, 166, 168, 170) in the page if the predetermined size is less than or equal to a largest fixed size memory block of the plurality of fixed size memory blocks (164, 166, 168, 170).

13. The method of claim 12, further comprising allocating (302) memory having at least the predetermined size if the predetermined size is greater than the largest fixed size memory block of the plurality of fixed size memory blocks (164, 166, 168, 170).

14. The method of claim 12 or claim 13, wherein the step of initializing (300) comprises storing a null pointer value in each of the plurality of block roots (184, 186, 188, 190).

15. The method of any one of claims 12 to 14, wherein the freelist (182) comprises a page root (192), and the step of initializing comprises allocating the page (160) and storing in the page root (192) a root page pointer to the page (160).

16. The method of claim 15, further comprising allocating a new page (162) and storing a branch pointer pointing to the new page (162) in the page root (192), and storing the root page pointer in the new page (162).

17. The method of claim 16, further comprising releasing the new page (162) and updating the page root (192) to comprise the root page pointer.

18. The method of any one of claims 12 to 17, wherein the predetermined size corresponds to one of the plurality of fixed size memory blocks (164, 166, 168, 170).

19. The method of any one of claims 12 to 18, wherein the predetermined size is a specific number of bytes.

20. The method of claim 19, wherein the memory block corresponds to a smallest sized memory block of the plurality of fixed sized memory blocks (164, 166, 168, 170) having at least the predetermined size.

21. The method of claim 20, wherein the step of allocating (314, 316) a memory block comprises allocating (314) a new page (162) if there is insufficient room in the page (160) for the memory block, and allocating (314) the memory block from the new page (162).

22. The method of any one of claims 12 to 21, further comprising releasing at least one previously allocated memory block as a free memory block, and adding said free memory block to the freelist (182).

23. The method of claim 22, wherein the step of releasing the at least one previously allocated memory block comprises:
i) receiving (400) a block pointer corresponding to the free memory block,
ii) copying (404) a pointer stored in one of the plurality of block roots (184, 186, 188, 190) to the free memory block, and
iii) copying (406) the block pointer to the one of the plurality of block roots (184, 186, 188, 190).

24. The method of claim23, wherein the pointer comprises a root pointer pointing to a second free block or a null pointer.

25. The method of claim 24, wherein the step of allocating (314, 316) the memory block comprises allocating the free memory block.

26. The method of claim 25, wherein allocating the free memory block comprises
i) reading (500) the block pointer stored in the one of the plurality of block roots (184, 186, 188, 190),
ii) providing (504) the block pointer to the application,
ii) reading (502) the pointer stored in the free memory block, and
iii) copying (506) the pointer into the one of the plurality of block roots (184, 186, 188, 190).

27. A memory allocation architecture having:
a memory page (160) subdividable into differently fixed size memory blocks (164, 166, 168, 170) free of header information in response to a memory request, each of the differently fixed size memory blocks (164, 166, 168, 170) storing application data or a first pointer; and,
a freelist (182) for containing a plurality of block roots (184, 186, 188, 190), each of the plurality of block roots (184, 186, 188, 190) corresponding to one of the differently fixed size memory blocks (164, 166, 168, 170), each of the plurality of block roots (184, 186, 188, 190) storing a null pointer or a second pointer pointing to one fixed size memory block storing the first pointer.

28. The memory allocation architecture of claim 27, wherein the first pointer comprises the null pointer or a branch pointer, the branch pointer for pointing to one other fixed size memory block (164, 166, 168, 170) storing another branch pointer, the one other fixed size memory block (164, 166, 168, 170) being the same size as the one fixed size memory block (164, 166, 168, 170).

29. The memory allocation architecture of claim 27 or claim 28, wherein the one fixed size memory block (164, 166, 168, 170) and the one other fixed size memory block (164, 166, 168, 170) comprise free memory blocks.

30. The memory allocation architecture of any one of claims 27 to 29, wherein the freelist (182) comprises a page root (192) for storing a page root pointer pointing to the memory page (160), and the memory page (160) for storing a third pointer.

31. The memory allocation architecture of claim 30, wherein the third pointer comprises a null pointer or a branch pointer, the branch pointer for pointing to another memory page (162).

## Amended claims

### Amended claims in accordance with Rule 137(2) EPC.

**1.** A memory allocation system comprising a memory (22) having a page (160) for storing data, the system having:
a processor (202) for executing an application, which application can request either a specific size of memory, or one of a plurality of fixed size memory blocks;
a small block memory manager (208) arranged to allocate a plurality of fixed size memory blocks (164, 166, 168, 170) free of header information in the page (160) in response to an application request for a fixed size memory block, and to allocate the smallest fixed size memory block that is at least the requested specific size if the application requests a specific size of memory the small block memory manager (208) including a freelist manager (214),
the freelist manager maintaining a dynamic freelist (182) of fixed memory block sizes up to the maximum block size, said fixed memory block sizes being derived from memory requests made by said application, and
a large block memory manager (210) for allocating memory in the page (160) according to a standard memory allocation scheme in response to an application request for memory greater than the maximum block size.

**2.** The memory allocation system of claim 1, further comprising a block request arbitrator (212) for selectively providing the application request for memory to the small block memory manager (208) when the size of requested memory is less than or equal to the maximum block size and otherwise to or the large block memory manager (210).

**3.** The memory allocation system of claim 1 or claim 2, wherein the freelist (182) has block roots (184, 186, 188, 190) corresponding to each of the plurality of fixed size memory blocks, the freelist manager (214) being arranged to link free memory blocks having a common size to one corresponding block root (184, 186, 188, 190), the free memory blocks corresponding to released fixed size memory blocks having the common size.

**4.** The memory allocation system of claim 3, wherein said fixed size memory blocks (164, 166, 168, 170) are released by said application by releasing the corresponding pointer to the beginning of the block to said freelist manager (214).

**5.** The memory allocation system of any preceding claim, wherein said fixed memory block sizes are preset based on statistical data from at least one historical task executed by said application.

**6.** The memory allocation system of claim 5, wherein the at least one historical task includes a plurality of historical tasks executed by the application during a training period.

**7.** The memory allocation system of any of claims 1 to 3, wherein said fixed memory block sizes are preset based on offline testing.

**8.** The memory allocation system of claim 3 or claim 4, wherein the freelist manager removes an existing block root corresponding to a fixed size memory block that is not requested by the application.

**9.** The memory allocation system of any preceding claim, wherein the standard memory allocation scheme comprises a buddy-block allocation scheme.

**10.** The memory allocation system of any one of the preceding claims, wherein the maximum block size is dynamically set by the application for a specific task.

**11.** A method for dynamic allocation of memory in a page (160) in response to receiving an application request (302) for memory, the method comprising the steps of:
initializing (300) a freelist (182) having a plurality of block roots (184, 186, 188, 190) each corresponding to a plurality of fixed size memory blocks (164, 166, 168, 170);
requesting a fixed size memory block or a specific size of memory for the application;
if the requested size is less than or equal to a largest fixed size memory block of the plurality of fixed size memory blocks (164, 166, 168, 170) either allocating (314, 316) a memory block having a size corresponding to one of the plurality of fixed size memory blocks (164, 166, 168, 170) in the page or, if the application requests a specific size of memory, allocating the smallest fixed size memory block that is at least the requested specific size, said fixed size blocks being free of header information;
if the requested size is greater than the largest fixed size memory block of the plurality of fixed size memory blocks (164, 166, 168, 170) allocating memory in the page (160) according to a standard memory allocation scheme, and
maintaining a dynamic freelist (182) of fixed memory block sizes up to the maximum block size, said fixed memory block sizes being derived from memory requests made by said application.

**12.** The method of claim 11, wherein said fixed size memory blocks (164, 166, 168, 170) are released by said application by releasing the corresponding pointer to the beginning of the block.

**13.** The method of claim 11 or claim 12, wherein said fixed memory block sizes are preset based on statistical data from at least one historical task executed by said application.

**14.** The method of claim 13, wherein the at least one historical task includes a plurality of historical tasks executed by the application during a training period.

**15.** The method of any of claims 11 to 14, wherein said fixed memory block sizes are preset based on offline testing.

**16.** The method of claim 11 or claim 12, wherein an existing block root corresponding to a fixed size memory block that is not requested by the application is removed.

**17.** The method of claim 11, wherein the known memory allocation scheme comprises a buddy- block allocation scheme.

**18.** The method of any of claims 11 to 17 wherein the maximum block size is dynamically set by the application for a specific task.
